# EUROPEAN PATENT APPLICATION

(11) **EP 1 748 342 A1**
(43) Date of publication of application: **31.01.2007**
(21) Application number: 05016547.1
(22) Date of filing: 29.07.2005
(51) Int. Cl.: G06F 1/00, H04L 29/06

(54) **Honeypot computer system for detecting viruses in computer networks**

(71) Applicant: H+BEDV Datentechnik GmbH, 88069 Tettnang (DE)
(72) Inventor: Auerbach, Oliver, 88069 Tettnang (DE)
(74) Representative: Hübner, Gerd

(57) **Abstract**

A honeypot computer system for detecting viruses in computer networks comprises
- at least two, preferably a plurality of detection computers - "Forwarders" (3.1, 3.2) - distributed over the network (1), each monitoring specified ones of its ports for incoming virus attacks,
- a central server computer - "Mainpot" (6)- in the network (1) communicating with said Forwarders (3.1, 3.2),
- each Forwarder (3.1, 3.2) reporting to said Mainpot (6) a detected virus attack data packet (4), sent on a certain port by a virus attack source (2), under a report protocol (HBP) comprising specified parameters (10, 11, 12) of the virus attack data packet (4) and an identifier (9) for the reporting Forwarder (3.1, 3.2),
- the Mainpot (6) constructing and sending back to the reporting Forwarder (3.1, 3.2) a preliminary answer data packet (8) for said virus attack source under said report protocol (HBP), and
- -the reporting Forwarder (3.1, 3.2) finalising an answer data packet (5) from said preliminary answer data packet (8) and resending said answer data packet (5) to the virus attack source (2).

## Description

The invention refers to a honeypot computer system for detecting viruses in computer networks. It is to be seen against the following background. Over the last few years worms and bots and other computer infections, which are summarized as "viruses" for the terminology of this application, in particular became a penetrating widespread threat. Antivirus companies have developed better and better heuristic detection processes against these pests but some are still slipping through. Therefore, the common method of adding signatures as soon as a new variant shows up is still very important. At a time when more than 40 new bot variants appear each day, it is important to have a binary sample for analysis in house.

A "traditional" honeypot that captures the latest variants of viruses is a quite efficient technique. A slight disadvantage is that most of the attacks are from the same subnet and after a while, one is aware of all bots around and less new variants are discovered. For increased efficiency, one has to set up more and more honeypots in different locations, especially different subnets. Usually this leads to a large amount of administrative effort, which implies fine-tuning on the honey pots behaviour each time a new technique or exploit is discovered to infect a machine.

In order to assist the full disclosure and understanding of the invention in the following passages the observations of the inventor leading to the invention are worth to be reflected. Inasmuch the inventor analyzed connection attempts on various ports like 135/139/445 on a router and took note that many were blocked. From previous analysis in virus labs, he already knew that these were attempts to infect a machine with copies of worms like Lovsan, Sasser, Korgo and various other bots. In order to capture a binary the inventor redirected one of those ports to a VMWare Windows XP machine without SP and without patches. After a couple of minutes, he managed to get a binary copy of a bot that seemed to be a brand new variant as it was not detected by a standard virus protection program at that time.

Only a couple of months earlier, the inventor had played with a fingerprinting tool called "nmap" (see http://www.insecure.org/nmap/) and saw it as a requirement that the honeypot behaves as the vulnerable Windows XP machine mentioned above. If an attacker uses this tool or any other fingerprinting technique, he should come to the conclusion that this is a real machine waiting for him to get infected. From time to time, one can see port scans on several of the well-known ports without any infection attempt afterwards. This could be a kind of automated manual collector of IP addresses for a later planned infection process. It could also be that someone tries to determine if the machine matches certain conditions.

A honeypot machine should at least respond as a regular machine on most ports. Even better would be to create a honeypot that is able to simulate more than just a machine including some standard services. Furthermore, it should be possible to simulate a Mydoom backdoor or a vulnerability such as the one Opaserv uses, for instance.

Finally, the inventor decided to use WinpkFilter (see http://www. ntkernel.com), a packet-filtering framework that gives the full control on each packet arriving and leaving a machine. According to Lance Spitzner's classification of honeypots (see Lance Spitzner - "Honeypots, Tracking Hackers", Page 73), this could be categorized as a low interaction honeypot, especially designed to capture binaries of worms and nothing more than that.

The first version of such low interaction honeypot was able to simulate the vulnerability MS04-011 (see http://www.microsoft.com/technet/security/bulletin/MS04-011.mspx) that was used a lot by Korgo at that time and the famous DCOM RPC vulnerability MS03-026 (see http://www.microsoft. com/technet/security/bulletin/MS03-026.mspx) that was first used by Lovsan - alias Blaster. Only by simulating these two vulnerabilities, the honeypot was able to capture 11.190 working binaries within three weeks in August 2004. A significant number was infected with the file infector virus W32/Parite. These were just various infected worms that merely carried the old file infector along. A statistic from the first three weeks the Honeypot went online can be seen in the following table 1:

**Table 1**

| | |
|---|---|
| 2777 | Worm/Korgo.U |
| 1399 | Worm/Korgo.S |
| 605 | Worm/Rbot.DO |
| 554 | Worm/Korgo.X |
| 543 | Worm/Rbot.JL |
| 436 | Worm/Rbot.DA |
| 370 | Worm/Rbot.GT |
| 310 | Worm/SdBot.JG |
| 295 | Worm/Korgo.Q |
| 293 | Worm/Korgo.P |
| 288 | W32/Parite |
| 3320 | other |
| 11190 | Total |

Overall, 142 different variants from various worms were captured. After a very successful start with sometimes a dozen of new variants a day, less and less new malware was discovered. Finally, the inventor started to implement more vulnerability behaviour as well as support for some common commands from the SMB protocol that were used by worms in order to propagate as can be seen from the following list of instructions in table 2:

**Table 2**

| | | |
|---|---|---|
| 80.133.8.16 | 445 | Request for new connection |
| 80.133.8.16 | 445 | Honeypot accepts connection from remote |
| 80.133.8.16 | 445 | Acknowledged |
| 80.133.8.16 | 445 | Acknowledge and finish connection |
| 80.133.8.16 | 445 | Request for new connection |
| 80.133.8.16 | 445 | Honeypot accepts connection from remote |
| 80.133.8.16 | 445 | Acknowledged SMB_COM_NEGOTIATE |
| 80.133.8.16 | 445 | SMB_COM_SESSION-SETUP_ANDX - NTLMSSP_NEGOTIATE |
| 80.133.8.16 | 445 | SMB_COM_SESSION_SETUP_ANDX - NTLMSSP_AUTH |
| 80.133.8.16 | 445 | SMB-COM_TREE_CONNECT_ANDX Path: \ipc$ |
| 80.133.8.16 | 445 | SMB_COM_NT_CREATE_ANDX File: lsarpc |
| 80.133.8.16 | 445 | SMB_CM_TRANSACTION Transaction Name: \PIPE\ |
| 80.133.8.16 | 445 | SMB_COM_RANSACTION Transaction Name: \PIPE\ -EXPLOIT CODE- |

After another peek of new variants, it turned back to the previous activity stage. An analysis of the source IP addresses pointed out that around 80 percent of the infections originated from the same subnet. At that time, the honeypot was located in the "Deutsche Telekom AG" subnet and the IP address was 80.133.x.x. This ISP is the largest in Germany and the connection with the Internet is terminated each day. Therefore, each machine will get a new IP address each time one dials up, but obviously the machine was always held in the 80.133.x.x. subnet, even if it was reconnected dozens of times. Therefore, one could conclude that other not-yet-seen variants of viruses were active in other subnets.

The reason is that most of the worms try addresses similar to their own, in order to have more success. Usually this will guarantee more success, as these addresses are more frequented than random generated ones, not to mention validity (see Gabor Szappanos ― "Advanced survival techniques in recent Internet worms", VB conference 2004 - Abstract in
http://www.virusbtn.com/conference/vb2004/abstracts/gszappanos.xml). Finally, to overcome this problem new traps in other subnets were set up.

Even if these other machines are installed just a few kilometres away, they might be in a different subnet presupposed their dialup receiver provided by the ISP is a different one. This distribution of the trap machines worked pretty well uncovering new variants of worms never seen before. Every time a new trap machine was put online, another peak of uncovered new variants could be detected.

A mailing routine was added to collect all the samples on a central server. The binary was shipped along with the original IP and port, timestamp, original filename and the whole infection log, which could help to determine bugs in the program as well as transmission errors or ideas for further implementations. At the time the email arrived on the server, a couple of error checks were made, it was decided if it had to be forwarded to a virus analysing lab for further analysis and statistics were built.

From this preparatory experiments it became clear that it is important to have as many traps as possible, having in mind that they should be in different subnets. All this gave rise to other problems as one has to maintain more than one trap machine, update it, collect and interpret the results. Moreover, only data from successful infection processes were collected, but if a new technique to compromise a machine is started there may be the need to implement further commands from the SMB protocol or even listen on other ports. From that former point of pre-implementation, there were some drawbacks that forced a redesign of the whole concept.

It is therefore an object of the invention to provide for a honeypot computer system which is able to detect a broader variety of viruses by using several honeypots without excessively increasing administrative and analysing complexity.

This object is achieved according to the invention by a honeypot computer system for detecting viruses in computer networks comprising
- at least two, preferably a plurality of detection computers - "Forwarders" - distributed over the network, each monitoring specified ones of its ports for incoming virus attacks,
- a central server computer -"Mainpot" - in the network communicating with said Forwarders,
- each Forwarder reporting to said Mainpot a detected virus attack data packet, sent on a certain port by a virus attack source, under a report protocol comprising specified parameters of the virus attack data packet and an identifier for the reporting Forwarder,
- the Mainpot constructing and sending back to the reporting Forwarder a preliminary answer data packet for said virus attack source under said report protocol, and
- the reporting Forwarder finalizing an answer data packet from said preliminary answer data packet and resending said answer data packet to the virus attack source.

The invention allows to design a system with as many traps as possible. Although it should be possible to collect and watch infection processes at one single point, the solution was further to split the Honeypot into two parts generating a "distributed honeynet". One is called "Forwarder" and the other "Mainpot", which have certain specified complementary functions as can be derived from the description of the preferred embodiment.

Further developments of the honeypot computer system according to the invention are cited in the depending claims the features and assets of which are also further explained in the following description of the preferred embodiment. In the drawings:
FIG. 1 is a schematic diagram of a honeypot computer system,
FIG. 2 is a representation of the report protocol used by the honeypot computer system, and
FIG. 3 is a flowchart representing the data packet traffic between a Forwarder and a Mainpot of the honeypot computer system.

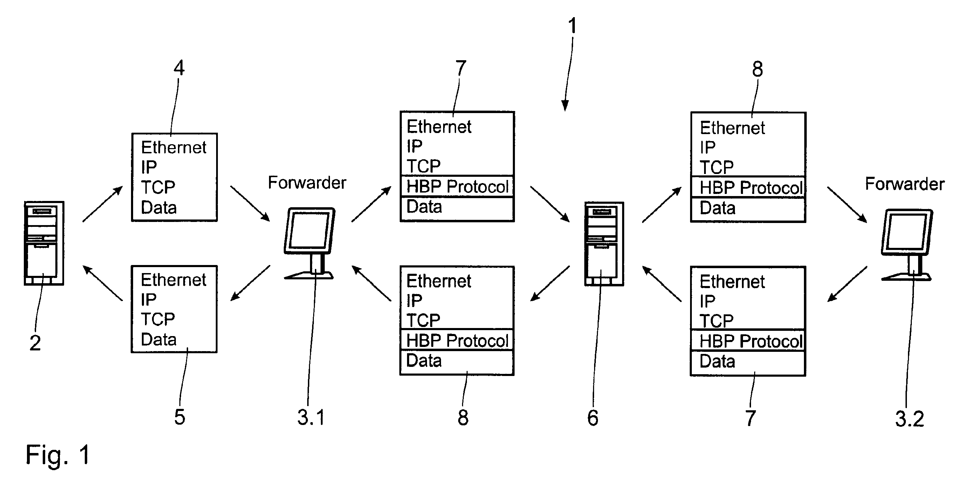

FIG. 1 represents part of a computer network 1 like the internet comprising a vast number of connected computers. Reference numeral 2 designates a computer which is programmed to be a virus attack source trying to spread a virus over the internet by contacting computers connected to the according network 1.

Having access to the latter a plurality of detection computers are installed, the so-called "Forwarders" two of which are designated by reference numerala 3.1 and 3.2, respectively. These Forwarders 3.1, 3.2 communicate with the other computers in the network 1 via data packets 4 containing data and being configured under the common communication protocols like ethernet, IP and TCP. Data packets 4 are received from the Forwarders 3.1, 3.2 via the network 1 from other computers, like the virus attack source computer 2. Likewise the answer data packets 5 are sent from one computer to the other and thus also from the Forwarders 3.1, 3.2 to the virus attack source computer 2. However, due to the honeypot computer system according to the invention the answer packets 5 are "specially designed " as will be explained below.

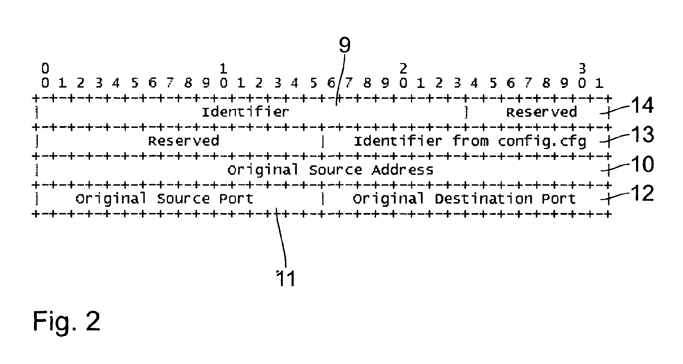

Beneath the Forwarders 3.1, 3.2 a central server computer, the so-called "Mainpot" 6 plays an important role in the distributed honeypot computer system. To this Mainpot 6 each Forwarder 3.1, 3.2 can connect and send data packets 7 and receive data packets 8 from the Mainpot 6. As is depicted in FIG. 1 these data packets 7, 8 are added by a special report protocol HBP comprising specified parameters concerning the virus attack data packet 4 and an identifier 9 (see FIG. 2) which is unique for each Forwarder 3.1, 3.2. Thus, the Mainpot 6 can securely detect from which Forwarder 3.1, 3.2 a certain data packet 7 was sent, as is further explained below.

Each Forwarder 3.1, 3.2 will redirect the traffic to a certain IP address and a certain port that can be configured using a configuration file along with the installation process. The traffic arriving on certain ports at the Forwarder side is not just a simple redirect using NAT ( see http://en. wikipedia.org/wiki/ Network_Address_Translation). As it is an aim of the invention to create reliable statistics, to watch out for seeding attempts of new malware and to figure out in which subnets certain malware is active, an own layer on top of the TCP protocol was implemented, namely the HBP protocol layer cited above.

As it is depicted in FIG. 2, the new protocol HBP is 16 bytes long and contains data such as an identifier 9, original IP 10, original source 11 and destination port 12, number 13 from configuration file and some free bytes 14 reserved for further ideas. The identifier 9 helps the Mainpot 6 to distinguish if the packet really comes from a Forwarder 3.1, 3.2, if it was just a port scan or any other data arriving on that port. The number 13 set in the configuration file could be any from 1 to 65535 and uses two Bytes in the protocol. This number has to be set manually during the Forwarders 3.1, 3.2 first installation process.

The purpose of this is to have the possibility to recognize each Forwarder 3.1, 3.2 even if the IP address changes. It makes sense to know which ISP and location are used, as the ISP might implement port filtering on common malware ports from one day to another and one won't receive anything and might wonder why. Other important data is the original source and destination port 11, 12. It is necessary to ship this data along, as the Mainpot 6 has to know how to react when constructing an answer packet. The original IP address 10 is shipped in order to provide statistics.

However, the original IP address 10, original source 11 and destination port 12 are needed later when a Forwarder 3.1, 3.2 has to strip down the protocol and construct the final answer packet. This is actually the same thing the Mainpot 6 does in a first step when a new packet arrives. Using the original ports and addresses the packet is reconstructed as it arrives on the Forwarder side. It is then saved to a log file including IP + TCP + Data and even the ethernet layer is saved there. The purpose of the saved packets is described below.

The Mainpot 6 searches its database for the type of data that the answer packet should contain. If it was successful, which means that this was already implemented it constructs the answer packet. Finally, the HBP protocol header is stripped up again and sent to a Forwarder 3.1, 3.2. This has the simple task to replace the original IP and the ports and to recalculate the checksums before sending the answer packet to the attacker. Depending on the connection and location, the delay between the Forwarder 3.1, 3.2 to the Mainpot 6 is around 200ms. The time both Honeypot parts need to construct the packet is less than 10ms, which means that most of the time is spent on the road.

As mentioned before, every incoming packet including all layers is saved to a log file. Not only the incoming but also the outgoing packets are stored there. The infection log is actually saved in a folder with the name of the original source IP address combined with the timestamp of the first communication. The timeframe when this is valid is only a couple of minutes long. The reason is that, at least in Germany, an IP address is different every time one connects to the internet. A new connection attempt at some point later will result in the creation of another folder, in order not to append the previous infection log with data that should be kept separately. Of course, it could be a reinfection attempt from the same machine but also a different machine using this IP for now.

Nevertheless, the infection log is important when it comes to unsuccessful infections. These could have many reasons, such as a broken internet connection, the machine where the worm is running was turned off during the transfer and so on.

Now it is rather interesting if a new technique is used in order to infect a machine. This could be a new exploit or just another command from the SMB protocol that was not yet implemented and it will simply result in not answering the packet at the Mainpot side.

Let's assume that the never-seen-before exploit code MSxx-xxx is used and it is not yet implemented. The infection log would save the communication until the point the Mainpot 6 doesn't know how to go further. In order to implement the next step, a tool is used that is able to read the infection log and simulate the whole communication against the aforementioned vulnerable Windows XP VMWare machine in a secure environment. The whole communication starting with the three-way handshake up to the last packet is simulated and finally one can figure out what the Mainpot 6 should have had answered in order to go further with the communication. At this point, one is able to implement this answer package into the Mainpot 6 and hope for an attacker using the same exploit and go another step further. A binary - probably from another source - would help a lot as one can simply create a full infection trace using Ethereal and implement all necessary communication in one single step. Without a binary to analyse in the virus lab, this is the only way to go further and finally capture the binary.

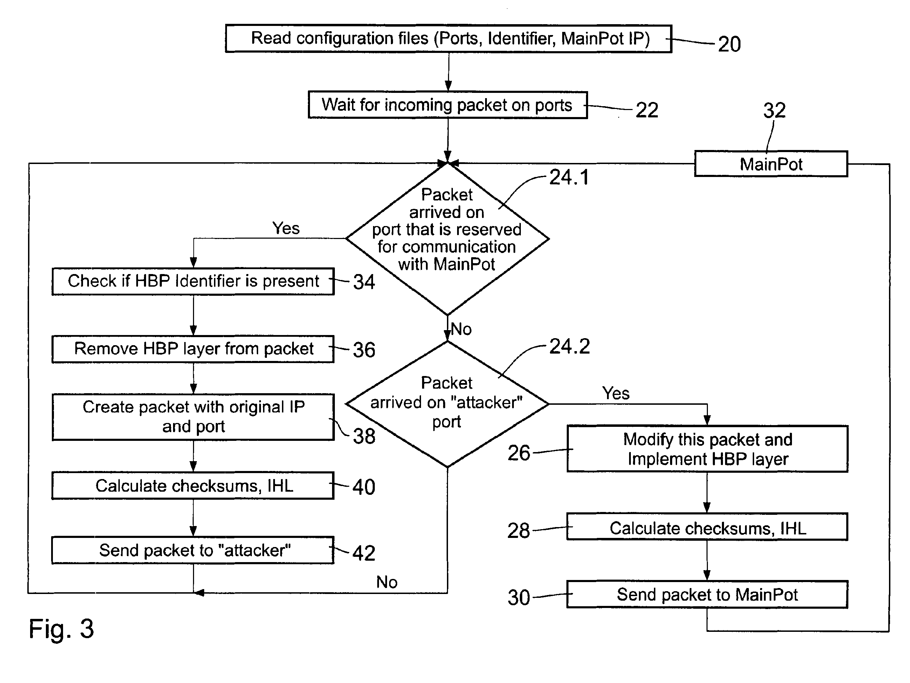

The process steps taking place on a Forwarder 3.1, 3.2 and its communication with the Mainpot 6 are illustrated by the flow chart according to FIG. 3.

### Step 20:

Right after start the Forwarder reads a configuration file that contains the following information:
- Mainpot IP address
- Mainpot Port (Destination port)
- Forwarder Port (Source port - The forwarder will listen on this port for incoming packets from the Mainpot 6)
- List of ports that are redirected to the Mainpot 6
- Identifier 9 that will help to distinguish each Forwarder from the others

### Step 22:

The Forwarder 3.1, 3.2 waits for an incoming packet on either the port that was chosen to communicate with the Mainpot 6 but also on the ports where an "attack" is expected.

### Branch step 24:

In case a packet arrives on one of those ports where an "attack" is expected the first branching step 24.1 takes the "no" branch to the second branching step 24.2 taking the "yes" branch to

### Step 26:

Where the HPB protocol is stripped up by modifying this packet implementing the HBP protocol layer.

### Step 28:

In the next step the checksums and the internet header length (IHL) are calculated by the Forwarder 3.1, 3.2.

### Step 30:

The packet thus generated by the Forwarder 3.1, 3.2 saving the original "attacker's" IP address and port are saved in the HBP protocol layer of this packet.

### Step 32:

The Mainpot 6 strips down the HBP protocol and reconstructs the packet as it arrived on the Forwarder. Now as the Mainpot 6 has the original packet it decides its further steps. This means it constructs an answer packet. The Mainpot 6 remembers now the IP and port that the Forwarder 3.1, 3.2 used and sends the answer packet there. Of course, this packet was stripped up with the HBP protocol layer in order to make sure that the Forwarder knows whom to send that packet to.

### Branch step 24.1:

Due to the receipt of a preliminary answer data packet arrived on the Forwarder's port that is reserved for communication with Mainpot 6 branching step 24.1 takes the "yes" branch to

### Step 34:

The Forwarder 3.1, 3.2 checks if the HBP identifier is present.

### Step 36:

The HBP protocol layer is removed from the packet.

### Step 38:

The Forwarder 3.1, 3.2 creates answer data packets with the original IP address and port of the "attacker".

### Step 40:

The Forwarder 3.1, 3.2 calculates the checksums and the internet header length IHL to complete the answer packet.

### Step 42:

The completed answer data packet is sent to the "attacker" which assumes that this packet comes directly from the Forwarder 3.1, 3.2 and does never realise that the packets are redirected to a central point where the answer packets are constructed.

## Claims

1. Honeypot computer system for detecting viruses in computer networks comprising
- at least two, preferably a plurality of detection computers - "Forwarders" (3.1, 3.2) - distributed over the network (1), each monitoring specified ones of its ports for incoming virus attacks,
- a central server computer - "Mainpot" (6)- in the network (1) communicating with said Forwarders (3.1, 3.2),
- each Forwarder (3.1, 3.2) reporting to said Mainpot (6) a detected virus attack data packet (4), sent on a certain port by a virus attack source (2), under a report protocol (HBP) comprising specified parameters (10, 11, 12) of the virus attack data packet (4) and an identifier (9) for the reporting Forwarder (3.1, 3.2),
- the Mainpot (6) constructing and sending back to the reporting Forwarder (3.1, 3.2) a preliminary answer data packet (8) for said virus attack source under said report protocol (HBP), and
- the reporting Forwarder (3.1, 3.2) finalising an answer data packet (5) from said preliminary answer data packet (8) and resending said answer data packet (5) to the virus attack source (2).

2. Honeypot computer system according to claim 1, wherein under said report protocol (HBP) said specified parameters (10, 11, 12) of the virus attack data packet (4) are at least one of the original IP address (10) of the virus attack source (2), the original source port (11) and the original destination port (12).

3. Honeypot computer system according to claim 1 or 2, wherein the identifier (9) for each Forwarder (3.1, 3.2) is readable from an configuration file.

4. Honeypot computer system according to claim 3, wherein said configuration file for each Forwarder (3.1, 3.2) further includes at least one of the Mainpot IP address, the Mainpot destination port, the Forwarder source port for incoming data packets from the Mainpot (6) and a list of ports to be redirected to the Mainpot (6).

5. Honeypot computer system according to one of claims 1 to 4, wherein the reporting Forwarder (3.1, 3.2) is adapted to finalise the answer data packet (5) by extracting the original IP address and port of the virus attack source (2) from the report protocol (HBP), calculating checksums and setting a correct internal header length field before sending the finalised answer data packet (5) to the virus attack source (2).

6. Honeypot computer system according to one of claims 1 to 5, wherein the Mainpot (6) is adapted to save virus attack data packets (4) reported by a Forwarder (3.1, 3.2) and/or according preliminary answer data packets (8) to a virus log file for later analyses of virus attack data packets (4).
